# DEMANDE DE BREVET EUROPEEN

(11) **EP 3 031 596 A1**
(43) Date de publication de la demande: **15.06.2016**
(21) Numéro de dépôt: 15197835.0
(22) Date de dépôt: 03.12.2015
(51) Int. Cl.: B29C 59/08, B05D 3/08, B62D 29/04, C08J 7/04

(54) **PROCÉDÉ DE PRÉPARATION D'UN MATÉRIAU PLASTIQUE FLAMMÉ**

(30) Priorité: 09.12.2014 FR 1462100
(71) Demandeur: COMPAGNIE PLASTIC OMNIUM, 69007 Lyon (FR)
(72) Inventeur: BLOT, Quentin, 69100 VILLEURBANNE (FR); VIOT, Frédéric, 01450 PONCIN (FR); GUENERON, François, 22770 LANCIEUX (FR)
(74) Mandataire: McDade, Sophie V.G.A.

(57) **Abrégé**

Procédé de fabrication d'une pièce en plastique pour véhicule automobile, ledit procédé comprenant l'étape suivante :
a) une étape de mise en forme d'un matériau comprenant un mélange homogène d'un polymère thermoplastique et d'un phosphite pour obtenir une pièce ayant une surface ; et
b) une étape de flammage de tout ou partie de ladite surface. L'invention porte également sur l'utilisation d'un phosphite pour la fabrication de pièces en plastiques et notamment de pièces automobiles ainsi que sur une composition comprenant au moins un polymère thermoplastique et au moins un phosphite.

## Description

La présente invention concerne des pièces en matériau plastique, et notamment un matériau plastique à base de polypropylène, qui est traitée par flammage pour augmenter les propriétés d'adhésion d'au moins une de ses surfaces.

### Description de l'art antérieur

Pour modifier l'apparence, ou protéger la surface, de matériaux il est connu d'apposer sur ces surfaces des films de composés organiques divers tels que des vernis et des peintures. Ces composés sont généralement associés à des solvants et appliqués à l'état liquide en une ou plusieurs couches (couches minces de quelques dizaines de micromètres d'épaisseur, µm) et séchés. En séchant, ces revêtements forment un film solide, adhérent et durable. Si le film est transparent ou translucide, c'est un vernis (peinture); s'il est opaque, c'est une peinture. Les vernis et peintures sont usuellement à base de polyuréthane, de résines époxy ou polyesters, de polycarbonates ou de résines acryliques. Les vernis et peintures contiennent au moins un, mais plus souvent plusieurs liants, aussi appelés résines. Ce mélange de résines donne au produit ses caractéristiques fondamentales : durabilité, résistance à l'abrasion humide, adhérence et pénétration dans le support, et aspect du film.

Obtenir une bonne adhésion de tels films sur la surface de matériaux, et en particulier sur la surface de pièces en matières plastiques, présente de nombreuses difficultés. Des techniques variées de traitement de ces surfaces sont utilisées pour améliorer l'adhésion de ces surfaces à des films ou revêtements.

Par exemple, le brevet des Etats-Unis No. 8,557,343 décrit un procédé pour promouvoir l'adhésion à une surface par application sur cette surface d'un composé promoteur d'adhésion comportant notamment une fonction amine, imine ou hydroxyle pour permettre l'apposition de couches de peintures ou vernis additionnelles sur des couches préexistantes.

Les brevets des Etats-Unis No. 5,702,772 et 5,916,674 décrivent l'activation de surfaces de matériaux, tel que du polypropylène, par application d'un plasma d'air ainsi que l'utilisation de composés tels que la dextrine pour protéger les surfaces actives ainsi créées.

La demande de brevet aux Etats-Unis 2010/0151236 décrit l'utilisation d'un matériau, et plus particulièrement d'un adhésif, dont une surface est traitée par un dispositif à plasma d'air pour augmenter sa composition en oxygène, notamment de 5 à 30 % en pourcentages atomiques mesurés par spectrométrie de photoélectrons induits par rayons X (XPS). Ce traitement par plasma permet une meilleure adhésion des surfaces ainsi que l'enlèvement d'éventuels contaminants présents sur les surfaces. Une analyse du déplacement du pic XPS correspondant à la variation d'énergie entre couches de valence et permet de déterminer la nature des liaisons chimiques à la surface des matériaux. Suivant la nature du matériau traité les proportions de groupements fonctionnels alcools/éthers, carboxyles, cétones, varient dans une large proportion.

La technique de flammage est la plus couramment utilisée pour améliorer les propriétés d'adhérence avant l'apposition de couches de peintures ou de vernis. Cette technique consiste à exposer la surface d'un matériau pendant un temps très court à une flamme. Le flammage permet ainsi d'assurer la bonne mouillabilité du substrat par les composés liquides qui y sont apposés et d'améliorer l'adhérence des revêtements sur le matériau. L'efficacité de cette technique dépend fortement des paramètres utilisés tels que le rapport air/gaz, le temps d'exposition et la distance de flammage ainsi que de la nature du matériau lui-même. Pour aboutir à un revêtement performant il est donc possible de modifier les conditions de flammage, par exemple la durée du flammage, la température de la flamme et/ou le rapport air/gaz. Cependant ces modifications si elles peuvent aboutir à une amélioration de l'adhésion lors d'un lavage haute pression peut engendrer une diminution des propriétés d'adhésion. Cette diminution est apparente lors de tests de qualification de l'adhérence peinture tels que, par exemple, les tests de l'immersion dans l'eau, de la tenue au nettoyeur haute pression, etc.

Une autre possibilité pour améliorer l'adhésion de revêtements sur la surface flammée est le choix d'un matériau particulièrement adapté au flammage. Cependant la nature du matériau (par ex. du plastique) étant déterminant pour les caractéristiques de la pièce de véhicule automobile, comme sa résistance, sa flexibilité, etc., il est difficile de modifier de manière substantielle les constituants du matériau et leurs proportions sans altérer les propriétés mécaniques du matériau, ce qui est, bien évidemment, à éviter.

Malgré les techniques utilisées, les défauts de peintures provenant d'un problème de mauvaise adhésion sont très fréquents dans l'industrie et peuvent être présents dans plus de 10% des surfaces peintes.

Il existe donc une nécessité de modifier les propriétés d'un matériau pour que la surface de celui-ci présente des caractéristiques d'adhésion satisfaisantes à l'application de revêtements après une étape de flammage sans modifier substantiellement ses propriétés mécaniques telles que notamment sa résistance au choc, sa flexibilité, sa légèreté, son retrait ou sa dilatation.

### Description

Procédé de fabrication d'une pièce en plastique pour véhicule automobile, ledit procédé comprenant l'étape suivante :
a) une étape de mise en forme d'un matériau comprenant un mélange homogène d'un polymère thermoplastique et d'un matériau anti-oxydant, tel qu'un phosphite, pour obtenir une pièce ayant une surface ; et
b) une étape de flammage de tout ou partie de ladite surface.

Selon un mode de réalisation particulier de l'invention, le procédé peut permettre de diminuer le taux d'oxydation de la surface flammée. En effet pour un certain nombre de matériaux leur exposition à des dispositifs de flammage standards aboutit à un taux d'oxydation de la surface flammée trop élevé qui est nuisible à la bonne adhésion de revêtements. En particulier un taux trop élevé d'oxydation peut induire des performances d'adhésion des revêtements diminuées en particulier pour ce qui est de la résistance à l'immersion dans l'eau. Il a été déterminé que le niveau d'oxydation de surface peut permettre de caractériser l'aptitude de la pièce à réaliser une bonne adhésion avec des revêtements tels que des primaires, des peintures des vernis et des colles.

Selon un mode de réalisation de l'invention ce procédé comprend une étape d'identification du taux d'oxydation de la surface d'un matériau susceptible de permettre une adhérence acceptable avec un revêtement, par exemple par analyse XPS.

Par taux d'oxydation on entend la quantité relative de liaisons carbone/oxygène par rapport aux liaisons aliphatiques carbone/carbone et carbone hydrogène.

Par « surface » on entend en particulier une épaisseur externe de matériau qui soit inférieure à 10nm, de préférence aux environs de 3nm.

### Additif antioxydant

Le composé antioxydant peut-être choisi dans le groupe des phosphites et de leurs mélanges, en particulier des phosphites organiques telles que les phosphites alkylaryle. En particulier il peut s'agir de phosphites tris(alkylaryle), comme du phosphite de tris(méthylphényle) ou de tris(butylphényle). De préférence le radical alkyle du phosphite comprend de 7 à 12 atomes de carbone tel que le phosphite de tris(nonylphényle).

La proportion du composé est avantageusement faible de manière à n'influer que de manière minimale sur les propriétés du matériau, on parle alors d'additif. Ainsi la concentration finale de cet additif dans le matériau peut aller de 0,01% à 0,5% en masse de la masse totale du matériau, de préférence de 0,05% à 0,5%, par exemple de 0,2 à 0,4% en masse.

La proportion du ou des composés antioxydants est avantageusement adaptée au niveau d'activation (ou« taux d'oxydation ») que l'on désire obtenir pour la surface flammée de la pièce.

### Polymère thermoplastique

Les matériaux pour la réalisation de pièces servant de base aux revêtements peuvent être des matières plastiques telles que des thermoplastiques. Ces matières peuvent comprendre l'acrylonitrile butadiène styrène (ABS), les polyamides tels que les polycaprolactames : [NH-(CH₂)₅-CO]ₙ (PA-6), et les polyhexaméthylène adipamides : [NH-(CH₂)₆-NH-CO-(CH₂)₄-CO]ₙ (PA-6,6,), les polycarbonates (PC), les polyéthylènes haute densité (PE-HD), les polyéthylènes basse densité (PE-LD), les poly(téréphtalate d'éthylène) (PET) amorphe ou cristallin, les poly(méthacrylate de méthyle) (PMMA), les polypropylènes (PP), les polystyrènes (PS) « cristal », polychlorure de vinyle (PVC) rigide et leurs mélanges.

Le polypropylène (PP) est une des matières plastiques les plus utilisées notamment du fait de sa simplicité de fabrication et de moulage, et de ces propriétés rhéologiques.

Selon un aspect particulier de l'invention le polymère utilisé est à base de polypropylène mais peut comprendre une ou plusieurs matières plastiques telles que celles décrites ici.

L'expression «à base de » désigne un matériau comprenant au moins 50% en masse du composé suivant cette expression. De préférence, le polymère plastique à base de polypropylène comprend au moins 60% de polypropylène, plus particulièrement au moins 70% et préférentiellement au moins 80% en masse total du matériau en matière plastique.

Le polypropylène est souvent mélangé à une plus faible proportion de polyéthylène (PE), généralement dans des proportions en masse PP/PE allant de 90/10 à 70/30, plus particulièrement 80/20. De tels matériaux sont particulièrement susceptibles de mal réagir à une étape de flammage par exemple en présentant un taux d'oxydation trop élevé.

### Autres composants

Les matériaux selon l'invention peuvent comprendre en sus d'une matière plastique une charge minérale ou organique, par exemple du quartz, du mica, du kaolin, du phosphate de calcium, du feldspath, de la stéatite, de la craie, du talc, du noir de carbone de la silice synthétique, du sulfate de baryum, de la ferrite de baryum, de la farine de bois ou d'écorce de fruit, de la pâte de cellulose, des fibres de verre, des microsphères de verre creuses très utilisées, silice synthétique, de l'argile nanométrique, du lin, etc. ainsi que leurs mélanges.

Cette charge peut varier de 1 à 75% en masse suivant la nature de la charge, par exemple de 3 à 30%, plus particulièrement de 1 à 40% en masse par rapport à la masse du matériau.

De préférence la charge comprend une charge minérale et en particulier du talc.

Le matériau plastique peut également comprendre un matériau élastomère, par exemple un copolymère de type EPR (Ethylene Propylene Rubber ou caoutchouc éthylène propylène) qui peut être présent dans une proportion allant de 5 à 35% en masse de la masse totale du matériau. La quantité de caoutchouc éthylène propylène est avantageusement de 5 à 15%, de préférence 10%, en masse par rapport à la masse totale du matériau.

Avantageusement dans le procédé selon l'invention le plastique comprend, ou consiste en, un mélange de polypropylène, de polyéthylène, de talc et de caoutchouc éthylène propylène et du composé antioxydant.

De préférence le matériau comprend, ou est constitué de, en sus du composé antioxydant, un copolymère P/E dans des proportions relatives en masse de 80/20 et comprenant 12% en masse de talc et 10% en masse d'un matériau élastomère de type EPR.

### Moulage de la pièce/ mélange maitre

L'étape de mise en forme du matériau, étape a), peut être une étape de moulage (par compression ou par injection) ou être obtenue par extrusion.

Dans le cas d'un moulage par injection, le matériau peut être directement réalisé lors du moulage de la pièce par adjonction et mélange de ses différents composants dans les proportions requises dans la vis de la presse du dispositif de moulage.

Alternativement le matériau peut, dans un premier temps, être fabriqué sous forme solide, par exemple sous forme de poudre ou de granulés. Les différents composés sont chauffés et mélangés, par exemple par une vis d'alimentation de matière, puis mis en forme (notamment par extrusion) et refroidis. Le matériau solide peut alors être utilisé dans le procédé selon l'invention pour la fabrication d'une pièce automobile. La mise en forme de ladite pièce est généralement effectuée par moulage mais d'autres types de mise en forme peuvent être utilisés.

Comme la proportion de composé antioxydant peut être très faible, il est préféré que le matériau soit fabriqué par le mélange du polymère avec une certaine quantité d'un autre mélange (appelé « mélange maitre ») comprenant, ou étant constitué d'un mélange dudit polymère et du composé antioxydant. Dans ce mélange le composé antioxydant est présent dans une concentration bien supérieure à la concentration finale désirée. L'utilisation d'un mélange maitre permet de mesurer de manière plus précise la quantité d'antioxydant dans le matériau ainsi que de permettre un mélange encore plus homogène de celui-ci avec le polymère. Ce mélange maitre peut être fabriqué par un procédé standard où le polymère de base est ramolli ou liquéfié puis est mélangé avec l'additif (tel que le phosphite) et éventuellement les autres composants dans des proportions prédéterminées avant d'être solidifié. Il peut être mis sous une forme solide particulière telle qu'une poudre ou des granulés par une étape d'extrusion et éventuellement de granulation. De manière avantageuse ce solide peut alors être utilisé dans la fabrication du matériau de la pièce automobile selon l'invention et/ou lors de la fabrication de la pièce automobile elle-même et fait donc partie d'un mode de réalisation de l'invention.

Il est également envisagé d'utiliser comme moyen de moulage la compression. Cette alternative utilise un substrat pré-imprégné tel qu'un tissu pré-imprégné du matériau (encore appelée matrice) qui est appliqué sur une forme et moulé, par exemple sous vide. Ce matériau d'imprégnation comprend donc déjà l'additif par une étape de mélange préalable.

### Flammage

Le procédé selon l'invention comprend une étape de flammage de la surface sur laquelle le ou les revêtements seront appliqués. Durant cette étape la surface traitée est exposée, pendant un temps très court, à une flamme qui conduit à la formation de groupements chimiques polaires en surface du matériau (de type cétones, acides ou esters principalement). Cette étape de flammage est connue dans le domaine technique de l'invention et peut être effectuée à l'aide d'un brûleur au gaz naturel ou au propylène. La quantité d'oxygène apportée lors de la combustion peut être un surplus par rapport aux conditions stoechiométriques de la combustion, on parle alors de conditions oxydantes. La quantité d'oxygène apportée lors de la combustion peut également être inférieure aux conditions stoechiométriques, on parle alors de conditions réductrices. Généralement les conditions du flammage sont des conditions légèrement oxydantes ou non. Des conditions de flammage typiques peuvent comprendre seules, ou en combinaison, les conditions suivantes :
- une distance à la flamme ou à la source de chaleur de 1 à 100cm, de préférence de 5 à 50 cm, par exemple 8cm ;
- un mélange gaz naturel/air d'environ 1/12 en v/v, c'est-à-dire avec 20 ± 2 % en volume d'air supplémentaire que pour une combustion dans des conditions stoechiométriques.
- Une vitesse de déplacement du brûleur de 500 à 1500 mm/s, de préférence de 800 à 1000 mm/s.

### Revêtement

Suite à l'étape de flammage, la surface est avantageusement revêtue d'au moins une, et généralement de plusieurs, couche(s) de composés. Ces revêtements, ou films, sont en particulier des peintures et vernis usuels tels que décrits précédemment. Il peut également s'agir de colles, de revêtements de métallisation ou de surmoulage.

Ces revêtements peuvent également être les différents revêtements d'apprêts utilisés dans le domaine des peintures de l'industrie automobile, et particulièrement des peintures de carrosserie, qui s'intercalent entre les couches pour en améliorer les caractéristiques d'adhérence, anticorrosion, de résistance au choc etc. En particulier il peut s'agir des films apposés directement sur la surface flammée (primaires) et qui sont à base (c'est-à-dire contenant plus de 50% en masse) de polyuréthane, de résines époxy ou polyesters, de polycarbonates, de résines acryliques ou d'un mélange de ces composants. Ceux-ci sont généralement dissous dans un mélange de solvants organiques.

Ainsi le procédé selon l'invention peut comprendre une étape subséquente d'application d'un revêtement tel qu'un vernis ou une peinture, sur la surface traitée par flammage.

### Autres

Le procédé selon l'invention est ainsi particulièrement adapté à la réalisation de pièces automobiles, et notamment de pièces peintes, comme par exemple une pièce de carrosserie.

Un objet de l'invention est donc une pièce automobile, et en particulier une pièce de carrosserie automobile, éventuellement revêtue d'une couche de peinture et/ou de vernis, obtenue par le procédé décrit.

Un autre objet de l'invention est une pièce automobile comprenant, ou étant constituée par, un matériau plastique comprenant un polymère et un phosphite, ledit matériau étant moulé et ayant au moins une surface flammée.

Un autre objet de l'invention est une pièce de véhicule automobile, et plus particulièrement d'une pièce de carrosserie automobile, dont le matériau comprend un polymère thermoplastique et au moins un composé antioxydant qui est notamment tel que décrit dans la présente demande et dans des proportions étant notamment celles décrites dans la présente de demande.

Un autre objet de l'invention est une composition plastique comprenant un mélange homogène d'au moins un polymère thermoplastique et d'au moins un phosphite. Le polymère thermoplastique et le phosphite et éventuellement leurs proportions respectives sont avantageusement tels que décrits dans la présente demande. En particulier ledit phosphite est avantageusement un phosphite organique, en particulier un phosphite tris(alkylaryle) tel que le tris(nonylphényle). Le polymère thermoplastique est de préférence un copolymère polypropylène/polyéthylène.

La composition plastique selon l'invention peut également comprendre d'autres composants et en particulier ceux décrits dans la présente demande, éventuellement dans les proportions y indiquées.

Enfin l'invention porte également sur l'utilisation d'un composé antioxydant tel qu'un phosphite pour la fabrication d'une pièce de véhicule automobile en matériau plastique flammée, de préférence par son mélange homogène avec au moins un polymère, notamment un polymère tel que décrit dans la présente demande. Cette utilisation permet en autre d'améliorer l'adhésion d'un revêtement lorsque la pièce est soumis à de l'immersion dans de l'eau. Le phosphite et le matériau plastique est avantageusement tel que décrit dans la présente demande.

L'invention sera mieux comprise à la lecture des exemples de réalisations, qui sont fournies à titre d'information et ne présentent aucun caractère limitatif.

### Exemples

### Exemple 1

Des plaques planes I en matière plastique moulées de 200x600 mm (également appelées éprouvettes) ont été réalisées pour exemplifier l'invention. Ces pièces ont été obtenues par le procédé suivant : Dans une extrudeuse à double vis standard, on verse dans la trémie d'entrée des granulés d'un copolymère propylène/éthylène, de proportion respective en masse P/E 80/20 de type P108. La température du fourreau est d'environ 200 à 210°C. L'extrudeuse permet l'ajout de composés à environs le tiers du parcours d'extrusion quand le polymère de départ a fondu. Sont ajoutés ainsi :
- 12% en masse de talc ;
- 5% en masse d'un mélange de P/E (80/20) comprenant 10% en masse de phosphite de tris(nonylphenyl) (CAS No. 26523-78-4).

La proportion de phosphite dans le matériau des plaques I est donc 0,05% en masse du mélange.

Ce mélange est extrudé pour former des granulés. Une presse à injection de type standard est ensuite utilisée pour mouler les pièces à partir de ces granulés. Ces pièces peuvent également être obtenues par l'utilisation d'une presse à injection. Le mélange des composants peut ainsi réalisé puis injecté directement dans le moule.

Les plaques I (ou éprouvette) ainsi obtenues sont ensuite soumises à un traitement de flammage.

Une surface de ces plaques est positionnée à 80 mm d'une source de chaleur. La source de chaleur utilisée est un brûleur de type Ipros au polypropylène dans des conditions légèrement oxydantes, c'est-à-dire avec 20 ± 2 % en volume d'air supplémentaire pour une combustion dans des conditions stoechiométriques. La vitesse de déplacement du brûleur est de 800 mm/s.

### Exemple 2 (essai comparatif)

Des plaques II de même forme et de même composition (à l'exception de la présence de phosphite) que les plaques I sont réalisées selon le même procédé que celui décrit à l'exemple1.

### Exemple 3 : réalisation de pièces peintes

Après le traitement de surface (flammage), et une fois les échantillons prélevés, on applique sur les plaques I et II, des couches de différents matériaux de primaires, de films et/ou de peintures qui vont constituer un feuil. Les plaques I et II de polymère qui supporte le feuil sont appelées subjectiles. Les traitements des plaques I et II sont identiques.

La première couche appliquée, appelée primaire, est un composant de type conducteur et polyuréthane dissous dans un mélange de solvants organiques. La seconde couche appliquée est constituée d'une couche de peinture grise métallisée de type polyuréthane dissous dans un mélange de solvants organiques, chargé de pigments et de paillettes métalliques. La couche finale appliquée est un vernis couramment utilisé dans l'industrie automobile de type polyuréthane dissous dans un mélange de solvants organiques.

Ces différents composés sont appliqués par pistolet à peinture basse pression avec mise en mouvement haut/bas afin d'assurer une bonne reproductibilité des quantités de chaque couche de matériau déposée. Dans cet exemple l'épaisseur des couches sont de 5µm pour le primaire, 25 µm pour la peinture et 30 µm pour le vernis. Le temps de séchage entre chaque couche est le même : 1 mn.

Les plaques recouvertes de ces couches sont ensuite introduites dans un four à circulation d'air chaud à 80°c pendant 20 mn afin de faire réticuler la peinture.

### Exemple 4 : Tests d'adhérence et de tenue

Les tests d'adhérence suivants ont été effectués pour les éprouvettes I et II.

### 1°) Test d'adhérence

Le feuil de peinture est incisé jusqu'au subjectile pour former un quadrillage et l'adhérence des carrés du réseau est appréciée. Les essais sont effectués dans une pièce à une température située entre 21°C et 25°C. L'essai doit être réalisé en trois endroits différents de l'éprouvette. Six incisions parallèles sont pratiquées, suivies de six incisions chevauchant les incisions initiales à 90°. L'espacement des incisions est de 2 mm.

L'éprouvette est ensuite légèrement brossée. Du ruban adhésif présentant une adhésivité comprise entre 600 g/cm et 750 g/cm (selon la norme NF EN 1939) est ensuite utilisé. Le centre du ruban adhésif est placé sur le quadrillage, parallèlement à l'une des directions d'incision, et on le fait adhérer sur le quadrillage et autour sur une longueur d'au moins 20 mm, en le lissant avec l'arête arrondie d'une pièce en bois. Le temps d'adhésion est au moins d'une minute. Dans les cinq minutes qui suivent l'application du ruban adhésif, celui-ci est retiré en prenant l'extrémité libre et en arrachant rapidement, en 0,5 à 1 seconde, sous un angle aussi proche que possible de 60°. Pour que le résultat soit satisfaisant aucun décollement du feuil ou de l'une quelconque des couches de revêtement le constituant ne doit être observé.

Ce test est réalisé sur une plaque à l'état initiale (test adhérence initiale) ainsi qu'après immersion dans l'eau (test de résistance à l'immersion) et chauffage (test de tenue à la chaleur).

### 2°) Test adhérence du feuil après immersion dans l'eau

Les plaques sont immergées dans de l'eau déminéralisée à 40°C pendant 10 jours. Les plaques testées sont sorties de l'eau, essuyées puis laissées au repos pendant 1 heure. On fait ensuite le test d'adhérence 1°) préalablement décrit.

### 3°) Test d'adhérence du feuil après chauffage

Les plaques sont exposées à une température de 85°C pendant 7 jours. Les plaques testées sont alors laissées à refroidir jusqu'à retour à la température ambiante. On fait ensuite le test d'adhérence 1°) préalablement décrit.

### 4°) Test de tenue au nettoyage haute pression

Un test de résistance au nettoyage haute pression a également été réalisé. Lors de ce test des incisions en forme de croix sont effectuées sur les plaques. Ces incisions sont au nombre de 2 sur chaque plaque. Elles sont en forme de croix, pénètrent jusqu'au subjectile et sont inscrites chacune dans un carré de 10 cm de côté. Ces plaques sont ensuite soumises pendant 30 secondes à un jet d'eau à 85°C émis sous une pression de 65 bars par une buse à jet plat d'un nettoyeur haute pression située à 10 cm de la pièce et dirigée sur les incisions. Pour que le résultat soit satisfaisant le décollement de chaque croix ne doit pas dépasser 1 cm² et le décollement du feuil ou de l'une quelconque des couches de revêtement le constituant doit être inférieur à 2 cm² sur l'ensemble de la plaque. Le décollement est mesuré par observation visuelle puis par réglet.

Les résultats de ces tests sont présentés dans le tableau II ci-dessous :

**Tableau II**

| Plaques | Tests de tenue du feuil | | | |
|---|---|---|---|---|
| | Test d'adhérence initiale | Test de résistance à l'immersion dans l'eau | Résistance au nettoyage haute pression | Test de Tenue à la chaleur |
| I | conforme | conforme | conforme | conforme |
| II | conforme | Non conforme | conforme | conforme |

### Exemple 5 : mesure de l'oxydation de surface par analyse XPS

Des échantillons de dimensions 5 cm X 5 cm sont prélevés par massicots sur les plaques environs 10mn après le flammage, en faisant attention de ne pas polluer la surface. Les échantillons sont ensuite emballés dans du papier aluminium pour protéger ceux-ci. Les échantillons sont stockés dans un dessiccateur sous vide moyen (avec trompe à eau).

Ces échantillons sont ensuite analysés par spectrométrie de photoélectrons induits par rayons X (ou analyse XPS). Des valeurs de 0,35 ± 0,03 sont considérées comme des valeurs permettant une tenue satisfaisante du feuil.

Un appareil d'analyse PHI Quantera SXM commercialisé par la société Physical Electronics, Inc. a été utilisé pour effectuer cette analyse. Les spécifications analytiques sont les suivantes :
- profondeur d'analyse : inférieure à 10 nm (environ 3 nm);
- profondeur analysable: quelques 1/10ième de µm maximum;
- diamètre aire analysée : 200 µm;
- tous les éléments chimiques sont détectables, sauf H et He;
- seuil de détection : 0,1 % à 0,5 % atomique;
- analyse quantitative :
   - précision 2 à 5 % selon la teneur;
   - justesse 20 %.

Les spectres obtenus ont tous été recalés d'après la composante aliphatique C-C/C-H du carbone, centrée à 285 eV. En surface, le pic C 1s présente plusieurs composantes correspondant :
- aux liaisons C-C/C-H pour des composés aliphatiques, à 285 eV,
- aux liaisons C-O et/ou C-N, à 286,4 eV,
- aux liaisons O-C-O et/ou C=O, vers 287,6 eV,
- aux liaisons O-C=O, vers 289 eV.

Ces trois dernières valeurs sont cumulées pour obtenir le rapport C-O/C-C.

Les résultats des analyses sont indiqués dans le tableau B suivant :

**Tableau A**

| Matière | Ratio c-o/c-c | incertitude | Tenue peinture |
|---|---|---|---|
| I | 0,35 | 0,03 | Conforme |
| II | 0,46 | 0,05 | Non conforme cloquage après immersion dans l'eau |

L'invention n'est pas limitée aux modes de réalisation présentés et d'autres modes de réalisation apparaîtront clairement à l'homme du métier.

## Revendications

1. Procédé de fabrication d'une pièce en plastique pour véhicule automobile, ledit procédé comprenant l'étape suivante :
a) une étape de mise en forme d'un matériau comprenant un mélange homogène d'un polymère thermoplastique et d'un phosphite pour obtenir une pièce ayant une surface ; et
b) une étape de flammage de tout ou partie de ladite surface.

2. Procédé selon la revendication 1, **caractérisé en ce que** ledit composé antioxydant est un phosphite organique, en particulier un phosphite tris(alkylaryle) tel que le tris(nonylphényle).

3. Procédé selon la revendication 1 ou 2, caractérisé en ce ledit phosphite est présent dans une proportion allant de 0,01% à 0,5% de la masse dudit matériau.

4. Procédé selon l'une quelconque des revendications 1 à 3, **caractérisé en ce que** ledit polymère est un polymère à base de polypropylène.

5. Procédé selon la revendication 4, **caractérisé en ce que** ledit plastique comprend, ou consiste en, un mélange de polypropylène, de polyéthylène, de talc et de caoutchouc éthylène propylène et dudit phosphite.

6. Procédé selon l'une quelconque des revendications 1 à 5, caractérisé en que ladite étape a) de mise en forme est une étape de moulage par injection.

7. Procédé selon l'une quelconque des revendications 1 à 6, **caractérisé en ce qu'**il comprend une étape subséquente d'application d'un revêtement tel qu'un vernis ou une peinture, sur la surface traitée par flammage.

8. Procédé selon l'une quelconque des revendications 1 à 7, **caractérisé en ce que** ladite pièce automobile est une pièce de carrosserie.

9. Pièce automobile comprenant, ou étant constituée par, un matériau plastique comprenant un polymère et un phosphite, ledit matériau étant moulé et ayant au moins une surface flammée.

10. Utilisation d'un phosphite pour la fabrication d'une pièce de véhicule automobile.

11. Composition plastique comprenant un mélange homogène d'au moins un polymère thermoplastique et d'au moins un phosphite.

12. Composition plastique selon la revendication 11, **caractérisée en ce que** ledit phosphite est un phosphite organique, en particulier un phosphite tris(alkylaryle) tel que le tris(nonylphényle).

13. Composition plastique selon la revendication 11 ou 12, **caractérisée en ce que** ledit polymère thermoplastique est un copolymère polypropylène/polyéthylène.
